# EUROPEAN PATENT SPECIFICATION

(11) **EP 3 488 212 B1**
(45) Date of publication and mention of the grant of the patent: **24.11.2021**
(21) Application number: 17768858.7
(22) Date of filing: 19.07.2017
(51) Int. Cl.: G01M 17/02

(54) **METHOD AND APPARATUS FOR CHECKING TYRES**
VERFAHREN UND VORRICHTUNG ZUM PRÜFEN VON REIFEN
PROCÉDÉ ET APPAREIL DE CONTRÔLE DE PNEUMATIQUES

(30) Priority: 21.07.2016 IT 201600076839
(43) Date of publication of application: 29.05.2019
(73) Proprietor: Pirelli Tyre S.P.A., 20126 Milan (IT)
(72) Inventor: BOFFA, Vincenzo, 20126 Milano (IT); HELD, Alessandro, 20126 Milano (IT); ANTOJ, Riccardo, 20126 Milano (IT); MARCHINI, Maurizio, 20038 Seregno (MB) (IT); CASADIO TOZZI, Giuseppe, 40026 Imola (BO) (IT); BALLARDINI, Valeriano, 40026 Imola (BO) (IT)
(74) Representative: Porta & Consulenti Associati S.p.A.
(86) International application number: PCT/IB2017/054376
(87) International publication number: WO 2018/015908

(56) References cited:
- WO-A1-2015/004587
- WO-A1-2015/079370
- WO-A1-2015/079370
- WO-A1-2015/097635

## Description

The present invention relates to a method and an apparatus for checking tyres, for example in a tyre production line, in particular an apparatus for checking for the possible presence of defects close to the walls of a tyre.

The production cycles of a tyre provide for making and/or assembling the various components of a tyre being processed in one or more building lines and subsequently subjecting the green tyre to a moulding and vulcanization process adapted for defining the structure of the tyre according to a desired geometry and tread pattern.

The tyre, when moulded and vulcanized, is defined by a toroidal structure wound around a rotation axis and substantially symmetrical with respect to an axial mid-plane perpendicular to said rotation axis. In particular, the toroidal structure comprises a crown portion arranged substantially perpendicular to the axial mid-plane in a radially outer area of the tyre, two anchoring portions arranged in radially inner areas of the tyre respectively on opposite sides of the axial mid-plane and two lateral portions that respectively extend from opposite sides of the axial mid-plane between one of the anchoring portions and the crown portion.

The term "axial mid-plane" is meant to indicate a plane perpendicular to the rotation axis equidistant from the axially outer portions of the tyre itself.

The term "crown portion" of the tyre is meant to indicate a portion of the tyre arranged substantially perpendicular to the axial mid-plane, in a radially outer area of the tyre, and corresponding to the tread band and to portions of the belt structure and of the carcass structure arranged radially inner with respect to the tread band.

The term "anchoring portions" of the tyre, commonly also defined as "beads", is meant to indicate the radially inner areas of the tyre, respectively arranged on opposite sides of the axial mid-plane, configured so as to engage with the rim of a wheel.

The term "lateral portions" of the tyre is meant to indicate portions of the tyre that respectively extend from axially opposite sides of the axial mid-plane between each of the anchoring portions and the crown portion, corresponding to the actual sidewalls and to portions of the carcass structure arranged in axially inner position with respect to the aforementioned sidewalls.

The terms "rested lateral portion" and "free lateral portion" of the tyre are respectively meant to indicate a lateral portion rested on a support plane and the opposite lateral portion arranged at a certain height from the support plane.

The terms "outer surface" or "inner surface" of the tyre are meant to respectively indicate the surface that remains visible after the coupling of the tyre with its own mounting rim and that which is no longer visible after said coupling. The inner and outer surface delimit the tyre.

The term "measurement surface" is meant to indicate a surface subjected promptly to checking having low dimensions with respect to the overall surface of said lateral portions.

The term "tyre profile" is meant to indicate the contour of at least part of the surface of the tyre, preferably of at least one from the outer surface and the inner surface of the tyre. Preferably, it means the contour taken on a radial section plane that contains the rotation axis of the tyre. More specifically, the term "profile" is meant to indicate the contour of a three-dimensional object, the shape, traced on a plane of projection from the lines passing through the centre of view and tangent to the surface of the object. The profile of the tyre therefore includes a set of points in a system of coordinated axes indicating the position in the space of the tyre itself, the envelope of the points defining the inner and outer surface of the tyre. Portions of the profile include portions of the inner and/or outer surface of the tyre.

US2006/0272408 describes a method and an apparatus for measuring the uniformity of the tyre. The method comprises the steps of mounting the tyre on a spindle, pressing a circumferential surface of a rotating drum against the tread surface of the tyre with a first pressing force, rotating the tyre around its axis, and calculating the forces on a first and a second plane of the tyre through calculation means while the tyre is rotating. WO 2015/079370 describes an apparatus for checking tyres comprising a support plane configured to receive a tyre with axial mid-plane parallel to the support plane, defining a rested lateral portion and a free lateral portion arranged at a certain height with respect to the support plane. A pushing element is configured to apply a force aimed towards the support plane to a measurement surface of the free lateral portion. A positioning actuator is operatively associated with the pushing element and configured to move the pushing element with at least one motion component perpendicular to a rotation axis of the tyre. The apparatus also comprises devices for modifying the angular position of the measurement surface. A control unit is programmed to detect a first value of output data at each position of the measurement surface as a function of a first value of input data kept substantially constant along at least one complete rotation of the measurement surface around the rotation axis and to detect a second value of the output data at each position of the measurement surface. The second value of the output data corresponds to a second value of the input data kept substantially constant along at least one complete rotation of the measurement surface. The control unit comprises a module programmed to calculate, at each position of the measurement surface, a difference between the second value of the output data and the first value of the output data. WO 2015/097635 describes tyre tread wear detection by means of three-dimensional imaging.

In known production cycles, to identify defects, the moulded and vulcanized tyre is subjected to a manual visual check or it can be subjected to an automatic check as described, for example, in the aforementioned document.

One of such manual visual checks is aimed at discarding tyres in which the lateral portion has little rigidity, i.e. at identifying the so-called "weak sidewall" defect, by sidewall meaning a lateral portion of the finished tyre.

The Applicant has observed that the accuracy of the manual checks carried out up to now depends greatly on the experience of the worker in charge of checking and has a high component of subjectivity.

The Applicant has noted that the insertion of a more accurate manual check to improve the quality of the finished product would risk to excessively increase the production times of a tyre.

The Applicant has observed that the use of automatic checks on the tyre of the type of those illustrated in US2006/0272408 can improve the objectivity of the checking itself but due to the high number of factors in play, precision in the measurement and repeatability of the checking process may not be guaranteed.

As described in WO 2015/079370, to the same Applicant, an apparatus and a method for detecting the "weak sidewall" defect has been developed which provides for arranging the tyre to be checked on a support plane according to non-varying ways relative to the check to be carried out, and acting on the free lateral portion for equal or different time periods with forces of different magnitude. In this way, some factors that led to uncertain repeatability of the checks and to a good outcome thereof could be reduced.

However, the Applicant has noted that the check described in WO 2015/079370, although it solves some of the problems outlined above, requires a relatively long execution time, since in order for it to be carried out it is necessary to have an action on the free lateral portion of the tyre through at least two forces or at least two movements, thus implying a repetition of the check at least twice in all of its steps, lengthening the overall times thereof.

Furthermore, as reference system for the application of the compression on the free lateral portion of the tyre, WO 2015/079370 uses the support plane from which it is necessary to determine the position of the free lateral portion, i.e. to determine where to apply the compression it is necessary to establish at what height the surface to be checked of the tyre is located with respect to the support plane. However, the "support plane" reference system is not a precise reference system: in order to apply a correct compression, it is preferable to know the exact position of the free lateral portion in space, from which to establish what force to exert on the free lateral portion or to what height to take the portion itself.

Moreover, in an apparatus of the type illustrated in WO 2015/079370 it is necessary to establish where the free sidewall of the tyre is located in space and from that position to exert a deformation on it. Establishing the position of the free sidewall of the tyre where to apply the deformation requires, for every tyre, a contact step through a suitable "feeler pin" with the surface of the tyre itself for a complete rotation of the tyre and this results in an increase in the cycle time for every tyre to be analysed.

The Applicant has therefore perceived that by arranging the tyre to be checked on a support plane and determining the position of the free lateral portion on which to carry out the checking in an absolute manner and not relative to other elements of the checking apparatus such as the support plane, and by acting on such a portion with a deformation at a substantially constant force in a relative rotation of the tyre by 360°, all of the factors that led to an uncertain repeatability of the checks and to a good outcome thereof, as well as the duration of the overall cycle time, could be reduced.

The Applicant has finally found that the arrangement of the tyre on a support plane, the determining of a three-dimensional profile of the surface on which a tool is positioned to carry out a deformation of the surface itself, and the subsequent application of a force of substantially constant magnitude to the surface under examination, solve the problems outlined above, making it possible to limit the factors that influence the outcomes of the check, making it reliable and repeatable.

More precisely, in accordance with a first aspect, the invention concerns a method for checking tyres according to claim 1.

The Applicant considers that the method according to the invention solves the problems outlined thanks to different factors. In fact - according to the invention - a three-dimensional profile of the tyre, in particular of at least one ring-shaped portion thereof, is detected. The ring-shaped portion is preferably a portion of the outer surface of the free tyre portion. This detection of the three-dimensional profile makes it possible to select an "absolute" coordinates system, i.e. it is possible to establish at what point the surface of the tyre that is compressed and deformed through a tool in the subsequent step of the method is located without reference relative to elements of the checking apparatus. The three-dimensional profile makes it possible to know the spatial position of the tyre independently from external elements. Therefore, the reference for the tool that must press the tyre is always given with respect to the profile of the tyre that represents the reference "zero height line".

The Applicant considers that, by using the aforementioned solution, the tyre checking method makes it possible to obtain an industrial-level automated checking system for tyres built/produced in any production plant, including plants that produce a large number of tyre models, even very different from one another, at the same time meeting the requirements outlined above with particular reference to the accuracy of the checks, to the compatibility with the building/production cycle time and to the flexibility and specificity of the entire checking system with regard to every tyre model.

In accordance with a second aspect, the invention is relative to an apparatus for checking tyres according to claim 9.

The Applicant considers that the apparatus according to the invention solves the problems outlined and allows the application of the method according to the first aspect. In particular, the calculation of the three-dimensional profile of the tyre defines an absolute and precise reference and the control unit is programmed to obtain a relationship, preferably a "difference value", unconstrained by each different type of tyre and by the boundary conditions of the measurements that are potentially always variable.

The present invention in at least one of the aforementioned aspects can have at least one of the following preferred characteristics.

Preferably, it is foreseen to provide a database including a plurality of tyre models, each tyre model of the plurality being associated with a value of said tool pressing force.

Preferably, it is foreseen to determine the tyre model arranged on the support plane.

Preferably, it is foreseen to recover a value of said tool pressing force saved in said database and associated with the tyre model determined.

Preferably, it is foreseen to push said measurement surface through said tool so as to apply said tool pressing force as recovered from said database.

The tyres, depending on the size, model and relative dimensional ratios, do not all offer the same resistance to deformation and are not therefore deformable in the same way. For example, excessively deforming a tyre can cause it to be permanently damaged and/or an impossibility of accurately determining the possible presence of detects. A deformation that is too "small" may not allow defects of small size to be detected. Therefore, it is advantageously foreseen to make a database where every tyre model is associated with a force to be applied on the measurement surface so as to optimise the measurements carried out according to the method of the invention for the detection of possible defects.

Preferably, it is foreseen to recover said three-dimensional profile from a memory.

Detecting the three-dimensional profile of the tyre or of a portion thereof, such as the ring-shaped surface, takes place before the deformation of the tyre through a substantially constant force. This step of acquisition of the profile can be carried out solely to see whether or not there is a weak sidewall defect, or it can take place in order to look for other types of defects. In fact, the three-dimensional profile of the tyre can be used to monitor different mutually distinct characteristics of the tyre. Therefore, it is preferable to store the profile of the tyre in order to use it for every need and for example for detecting more than one defect in said tyre. The storing can take place for example in a suitable memory and more preferably in a database.

Preferably, it is foreseen to detect a three-dimensional profile of an entire inner surface and an outer surface delimiting said tyre.

Detecting the profile of the entire tyre makes it possible to use the profile to determine defects of a different type in different positions of the tyre.

Preferably, providing a tyre having a rotation axis on a support plane includes arranging said tyre on said support plane with axial mid-plane substantially parallel to the support plane.

In this way, there are portions of outer surface of the tyre that are substantially parallel to the support plane or that have a substantially constant height from the support plane for an extension thereof around the rotation axis of the tyre.

Said ring-shaped surface is a portion of outer surface of said free lateral portion of said tyre.

Advantageously, the tool is brought towards the outer surface of the tyre, which is easier to access with respect to the inner surface. Therefore, preferably, the measurement surface is a portion of a ring-shaped surface that is part of the outer surface of the tyre. More preferably, it is a portion of the outer surface of the tyre at the free lateral portion thereof.

Preferably, said measurement surface is arranged at the axially outer area of the free lateral portion of the tyre.

The Applicant has been able to verify experimentally that such an area is that which, in an instrument analysis, most clearly highlights the possible weakness of the free lateral portion.

Preferably, said measurement surface is arranged at the area of the free lateral portion of the tyre arranged at the greater height with respect to the support plane before the application of said force.

The Applicant has been able to verify experimentally that such an area is that which, in an instrument analysis, most clearly highlights the possible weakness of the free lateral portion.

Preferably, it is foreseen to inflate said tyre before the application of said force.

Preferably, pushing said measurement surface through said tool includes pushing said measurement surface through said tool with a tool pressing force comprised between about 10 N and about 150 N.

Through laboratory testing, the Applicant has verified that the height to which the measurement surface is to be brought or the force to be applied to the measurement surface, if within these claimed ranges, is such as to cause a substantial displacement, but always within an elastic range, of the free lateral portion to evaluate the response thereof in terms for example of rigidity.

Preferably, it is foreseen to obtain said three-dimensional profile.

It is foreseen to save said three-dimensional profile in a memory.

Preferably, it is foreseen to use said saved profile to detect more than one type of defect on said tyre.

The detection of a three-dimensional profile of at least one surface of the tyre and therefore the determining an "absolute" reference system can be used not only to detect the weak sidewall defect, but also to detect other defects that are possible in the tyres. Therefore, a single detection step of the profile can be used for different checks of the tyre itself.

Preferably, it is foreseen to set the tyre in rotation about said rotation axis with respect to said tool to vary the measurement surface in contact with said tool.

The rotation of the tyre with respect to the tool is foreseen to limit the possible vibrations of the tool itself and therefore it is possible to obtain a more accurate measurement. Furthermore, setting the tyre in rotation with respect to the tool is technologically simpler.

Preferably, it is foreseen to flip the tyre so as to invert the free lateral portion and the rested lateral portion and repeat the actions according to the first aspect of the invention.

In order to obtain a complete check of the tyre, firstly an outer surface of the lateral portion thereof that is initially free is examined; the tyre is then rotated perpendicular to its rotation axis, and the check is repeated on what was previously the lateral portion rested on the plane, which has now become free. In this way, a check of both sidewalls of the tyre is possible.

Preferably, comparing said height of said measurement surfaces at a plurality of relative angular positions between said tyre and said tool with a height of a plurality of points of said three-dimensional profile of said ring-shaped surface at the same angular positions includes comparing said height of said measurement surface and a corresponding height of a point of said three-dimensional profile every 0.1 radians.

When the measurement surface is compressed at constant force, preferably the height to which it is brought is measured continuously, in other words for every relative displacement of 0.1 radians between tyre and tool so as to have a sufficiently precise sampling for the evaluation of the weak sidewall defect. For every point measured, therefore, a comparison is made between the measured height and the height of the corresponding point (i.e. of the point at the same angle) of the three-dimensional profile.

It is foreseen to calculate a plurality of differences between said height of said measurement surfaces and said height of a plurality of points of said three-dimensional profile of said ring-shaped surface at every relative angular position between said tyre and said tool, and to classify said tyre as including a defect if at least one of said differences is outside of a predetermined range of values.

Therefore, if the deformation for example is greater than a certain value, so that the difference between the measured height of a point of the measurement surface and the height of the same point in the three-dimensional profile is greater than a certain value, then it is deduced that the defect searched for is present and therefore the tyre is to be discarded.

Preferably, said deformation system includes a thrusting roller.

More preferably, the thrusting roller is mounted so as to be able to rotate freely about its own axis.

Advantageously, the compression takes place through the roller rested against a portion of outer surface of tyre. The roller being able to rotate keeps the portion compressed for a rotation of the tyre about its rotation axis, so that the same surface can be checked in any angular position. When the tyre is set in rotation, the position of the roller remains the same, rotating about its axis due to the rotation of the surface of the tyre with which it is in contact.

Preferably, the apparatus according to the second aspect comprises a thrusting actuator operatively associated with the tool and configured to push the tool against the free lateral portion, said thrusting actuator including an electric motor.

Through an electric motor it is possible to carry out a fine adjustment of the position of the tool and of its distance from the outer surface of the tyre.

Preferably, said measurement surface is arranged at the outer surface of the free lateral portion of the tyre.

Preferably, the apparatus comprises a memory adapted for storing said three-dimensional profile and adapted for being accessible to access said three-dimensional profile.

Further characteristics and advantages of the invention will become clearer from the following description of a method and an apparatus for checking tyres according to the invention made for indicating and not limiting purposes with reference to the attached figures, in which:
- figure 1 is a schematic perspective view of an apparatus according to the present invention;
- figure 2 is a schematic side section view of the apparatus of figure 1 in a different operative condition;
- figure 3 is a schematic section view of a tyre as arranged in an apparatus according to the present invention;
- figure 4 is a graph in which the X-axes show the angular position of a plurality of measurement surfaces of the tyre and the Y-axes show the value of output data corresponding to the height of a free portion of the tyre following the application of a substantially constant force in a tyre including a weak sidewall defect;
- figure 5 is a graph in which the X-axes show the angular position of a plurality of measurement surfaces of the tyre and the Y-axes show the value of output data corresponding to the height of a free portion of the tyre following the application of a substantially constant force in a tyre in the absence of the weak sidewall defect;
- figure 6 is a schematic view from above of a tyre in a step of the method of the invention; and
- figure 7 is a schematic side section view of the tyre of figure 6 in a further step of the method of the invention.

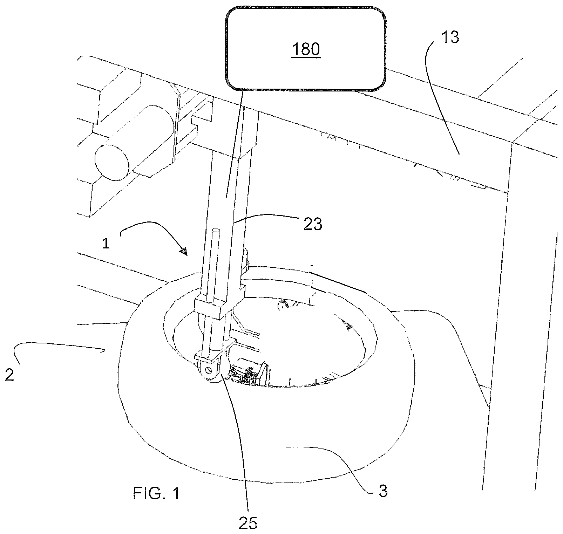

With reference to the attached figures, and in particular initially to figures 1 to 3, reference numeral 1 wholly indicates an apparatus for checking tyres in accordance with the present invention.

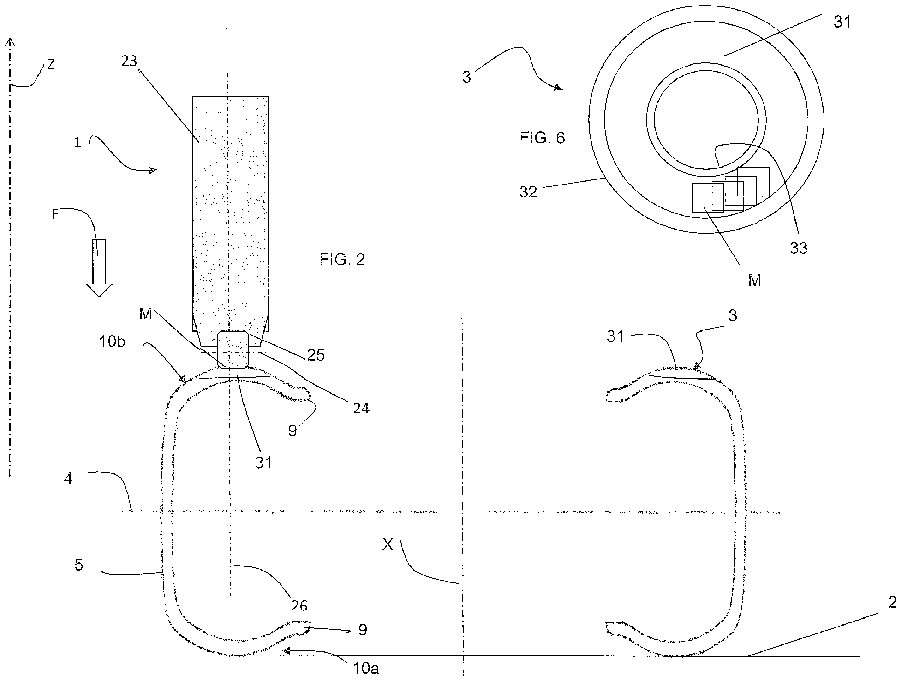

Reference numeral 2 indicates a support plane, preferably horizontal, configured to receive a tyre 3 arranged with axial mid-plane 4 (represented solely in figure 2) substantially parallel to the support plane.

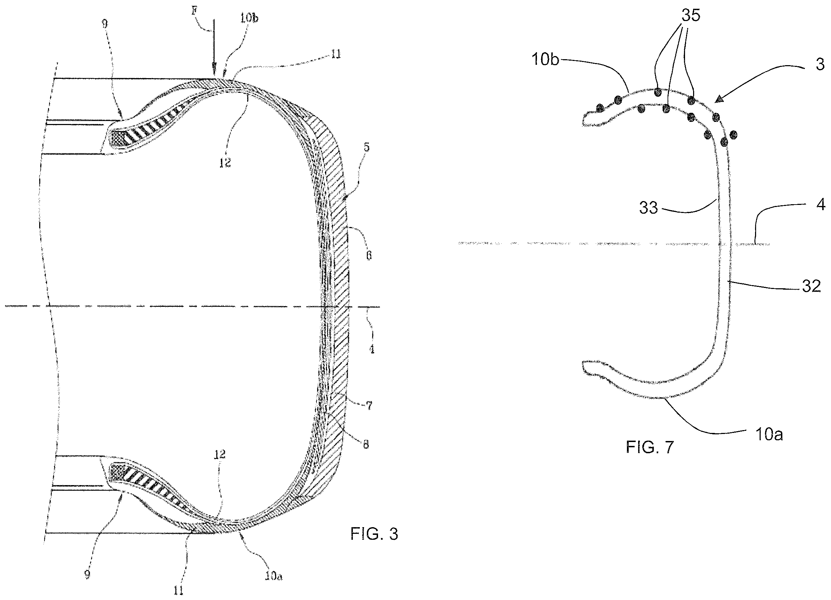

The tyre 3, having rotation axis X, comprises (see in particular figure 3) a crown portion 5 arranged substantially perpendicular to the axial mid-plane, in a radially outer area of the tyre. Such a crown portion 5 corresponds to a tread band 6, to portions of a belt structure 7 and to portions of a carcass structure 8 arranged radially inner with respect to the tread band 6.

The tyre 3 also comprises two anchoring portions 9 arranged radially inner and respectively on opposite sides of the axial mid-plane. The anchoring portions 9 are configured so as to engage with the rim of a wheel.

The tyre 3 also comprises two lateral portions 10a, 10b that extend respectively from axially opposite sides of the axial mid-plane 4 between each of the anchoring portions 9 and the crown portion 5. Every lateral portion corresponds to a sidewall 11 and to portions of the carcass 12 arranged in axially inner position with respect to the sidewall 11.

When the tyre 3 is rested on the support plane 2 one of the two lateral portions of the tyre is directly in contact with the aforementioned support plane 2 defining a rested lateral portion 10a. The other of the two lateral portions of the tyre is arranged at a certain height with respect to the support plane defining a free lateral portion 10b.

The support plane 2 is arranged inside a frame 13, schematically and partially visible in figure 1, with respect to which it can rotate about an axis coinciding with the rotation axis X of the tyre rested on it. The apparatus 1 also comprises devices for setting the support plane 2 in rotation with respect to the frame 13, not illustrated.

The apparatus for checking tyres 1 includes, in addition to the frame 13 and to the support plane 2, a tool, such as a pushing element 23, adapted for resting and for pushing, deforming, a portion of the tyre 3, and in particular for resting and deforming a part of the free lateral portion 10b.

Preferably, the pushing element 23 comprises a wheel 25 arranged with rotation axis 24 preferably horizontal and, in use, oriented substantially according to a radial direction of the tyre rested on the support plane 2 (see for example the configuration represented in figure 2).

The pushing element 23, for example including a thrusting actuator, is configured to be pushed against the free lateral portion 10b along a pushing direction so as to apply a force F on the free portion of the tyre. Preferably, the thrusting direction comprises a component along a vertical axis, for example parallel to the axis Z as depicted in figure 2. Such an axis is indicated with 26 in the same figure and hereinafter called "approach direction".

The apparatus 1 also comprises a control unit 180 (visible only in figure 1) in which a three-dimensional profile of at least one portion of the tyre 3 is saved, for example in a suitable memory, not visible. With reference to figures 6 and 7, such a portion comprises at least one ring-shaped surface 31, having substantially the shape of a toric section, better described hereinafter.

As can be seen in the schematic representation of figure 6, the tyre 3 is delimited by an outer surface 32 and by an inner surface 33 that constitute in every section of the tyre the perimeter edge thereof. The pushing element 23, and in particular the wheel 25, is adapted for making contact with a portion of the outer surface 32 at the free lateral portion 10b. Moreover, since preferably during checking the tyre is set in rotation with respect to the pushing element 23, as detailed hereinafter, a ring-shaped surface of the outer surface of the free lateral portion 10b comes in contact with the wheel 25.

Therefore, so that the wheel 25 touches the tyre in a surface portion for which a three-dimensional profile has been acquired, such a profile comprises at least the ring-shaped surface 31.

Preferably, the control unit 180 is also adapted for driving the tool 23 towards and away from the tyre 3, as well as for adjusting a force F to be applied to the surface of the tyre 3. The force F to be applied preferably depends on the type and/or model of tyre. Therefore, for example in the same memory in which the three-dimensional profile of the tyre is stored, a database is also saved in which for every type and/or model of tyre a value of the deformation force F is associated.

The three-dimensional profile saved in the memory of the control unit 180 includes for example a plurality of sections like that of figure 7, which can consist of continuous lines or a plurality of discrete points, for example indicated with 35, the envelope of which describes the ring-shaped surface 31. Preferably, a three-dimensional profile of the entire inner surface 33 and of the entire outer surface 32 is present in the memory of the control unit 180.

In use, a tyre 3 is arranged on the support plane 2 with axial mid-plane substantially parallel to the support plane itself, so as to define the rested lateral portion 10a and the free lateral portion 10b.

Since the three-dimensional profile of the tyre 3 is known, the spatial position thereof is known and therefore so it is the position thereof relative to the support plane 2.

In order to apply the force F oriented towards the support plane 2 to a measurement surface of the free lateral portion 10b, part of the ring-shaped surface 31, the pushing element 23 is positioned with respect to the free lateral portion 10b at the vertical on the measurement surface. The positioning does not require that the position of the "upper edge" of the tyre is detected, since such a position is known from the three-dimensional profile. Thereafter, an approach stroke to the free lateral portion 10b is activated bringing the pushing element 23 towards the tyre 3. Finally, a pushing stroke of the pushing element 23 against the free lateral portion 10b is activated.

In greater detail, the force F applied has at least one motion component parallel to the rotation axis X of the tyre.

The movement of the tool 23 can take place for example through a first radial translation and a second translation along the axis 26 towards the tyre.

The initial radial translation of the tool 23 is carried out based on the size of the tyre being tested until the pushing element 23 is positioned with respect to the free lateral portion 10b at the vertical on the selected measurement surface. In other words, the translation is carried out until it reaches the radial position corresponding to the desired measurement surface. The measurement surface is for example arranged at the area of the free lateral portion 10b of the tyre arranged at the greater height with respect to the support plane 2 before the application of the force F. Preferably, the measurement surface is arranged at the axially outer area of the free lateral portion 10b of the tyre.

Having reached the desired radial position, through the approach actuator the approach stroke to the free lateral portion 10b is activated bringing the pushing element 23 towards the tyre 3 along the approach direction 26.

The approach stroke is blocked when the outer surface 32 of the tyre 3 is reached, the height of which is known since the three-dimensional profile of the tyre is known.

Such a position allows the pushing element 23 to come in contact with the free lateral portion 10b. The thrusting actuator is brought to the desired pushing pressure so as to activate the pushing stroke of the pushing element 23 against the free lateral portion 10b and exert the force F. The value of the force F is determined for example by recovering such a value from the database present in the control unit 180. The value F depends on the type and/or model of tyre that has been rested in the support plane 2. However, it is possible to provide for a manual insertion of the value of the force F or a modification of the preset value of the force F. The measurement surface M corresponds to the surface of the free lateral portion 10b in contact with the pushing element 23.

Possibly, the tyre can be either inflated or deflated during the application of the force.

The support plane 2 is set in rotation about the rotation axis X of the tyre 3 keeping the contact between the pushing element 23 and the free lateral portion 10b of the tyre to be checked. The pushing element 23 maintains its position and the wheel 25 rotates on the free lateral portion 10b.

It is preferable for the measurement surface to be arranged a substantially constant distance from the rotation axis. Therefore, the wheel 25 comes into contact with a plurality of measurement surfaces M, all part of the ring-shaped surface 31. A plurality of measurement surfaces M are thus defined that are angularly spaced apart, as exemplified in figure 6, where every measurement surface is indicated with a rectangle.

In accordance with a possible embodiment, the force F is kept substantially constant in the different steps of the checking of the tyre, so as to detect the height of the free lateral portion 10b of the tyre 3 at every position taken up by the wheel on a distinct measurement surface M.

For example to detect the height of the free lateral portion 10b, the apparatus 1 can comprise a linear position transducer (not illustrated) suitable for detecting the positions of the pushing element 23.

The value of the force F applied is preferably kept substantially constant along at least one complete rotation of the tyre 3 about the rotation axis, so that the measurement surfaces M grouped together form a substantially ring-shaped surface. For example, the value of the force applied can be comprised between about 10 N and about 150 N.

In other words, the surface portion for which the profile is detected comprises at least one ring-shaped surface about the rotation axis of the tyre. The profile of an annular surface is detected so as to be able to carry out a relative rotation of the tyre by 360° with respect to the tool knowing the position of the surface of the tyre to be checked in every angular position during the aforementioned rotation.

The three-dimensional profile, however, can be detected for the entire tyre and not only a portion thereof, for example the profile of the entire inner surface and/or of the entire outer surface thereof can be detected.

The tool that carries out the deformation is rested on this ring-shaped surface, and in detail in a portion thereof called measurement surface. Tyre and tool are then set in relative rotation, so that the tool at each time t deforms a different measurement surface, which continues to be part of the ring-shaped surface, angularly displaced with respect to the measurement surface with which the tool was in contact at time t-1. This deformation ends when the entire ring-shaped surface has been crossed (i.e. a rotation of 360° has been carried out) and deformed by the tool.

Preferably, the angular speed of relative rotation between tyre and tool is substantially constant.

Therefore, no preliminary investigative step to the deformation is necessary to determine the spatial position of the tyre, for example with respect to the support plane. The position of the tyre, and therefore of the measurement surface, is always known thanks to its three-dimensional profile being known.

As illustrated above, the deformation of the surface of the tyre through the tool is carried out by applying a substantially constant force during the aforementioned rotation.

The tool is brought into contact during the rotation with a plurality of surface portions, each of which is deformed during the rotation. These deformed surface portions angularly spaced apart are preferably all at the same axial distance from the rotation axis of the tyre. For each one a height of the deformed surface is obtained.

During the pressure at substantially constant force for a relative rotation of 360° between tool and tyre, the height at which the deformed surface portion of the tyre is located is detected. This height is detected either continuously (i.e. obtaining a continuous line of heights) or at intervals, preferably regular, for example every 0.1 radians, or even in an equivalent manner every 0.2 seconds considering a substantially constant rotation speed of the tyre.

This plurality of heights that are measured of the portion of measurement surface deformed by the tool substantially define a plurality of spatial positions corresponding to the position along a vertical axis of the measurement surfaces deformed by the application of the constant force.

The deformation, i.e. the height reached by the portion of measurement surface, is indicative of the reaction, possibly different from point to point, of the tyre in response to such a force applied. Since the force is substantially constant, a different reaction from point to point depends on the different characteristics of the tyre between one portion thereof and another, for example highlighting defects such as the weak sidewall.

Advantageously, the control unit 180 of the apparatus 1 is programmed to detect the value of the height at every position of the wheel 25 on the corresponding measurement surface. The value of the force F is always substantially constant. Subsequently, it is foreseen to calculate, at every angular position of the tyre 3, a difference D between the value of the height measured in such an angular position and the height of the tyre in the same angular position as determined by the three-dimensional profile.

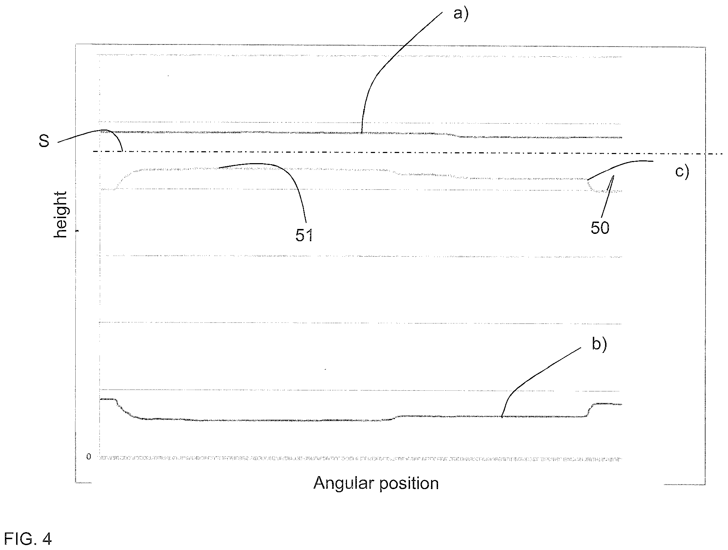

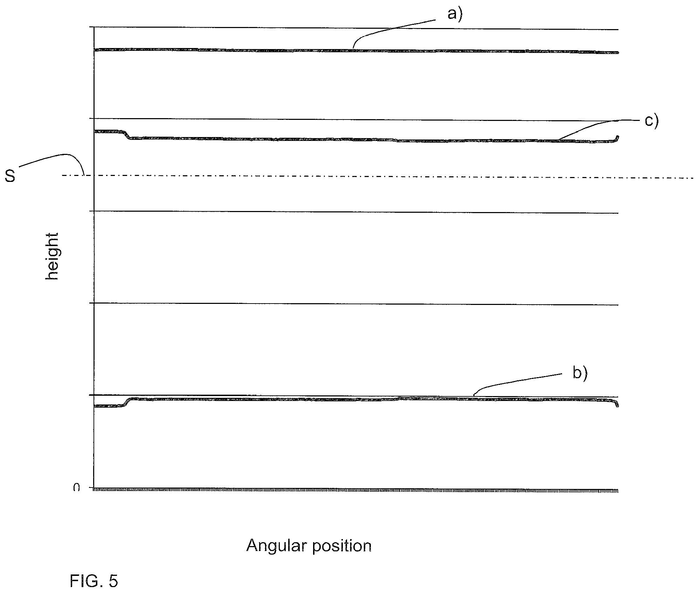

The value of the difference D is then compared with a discard threshold S so as to discard or accept the tyre as a function of the result of such a comparison. According to a preferred example in which D expresses the difference between the measured height value and the height value from three-dimensional profile, figure 4 corresponds to a tyre to be discarded since the difference D is less than the discard threshold S whereas figure 5 corresponds to an acceptable tyre since the difference between the two heights is greater than the discard threshold.

The detection of the three-dimensional profile of the tyre allows a comparison to be made between the plurality of heights to which every measurement surface is brought during the rotation while a constant force is applied and the height of the geometric points forming the profile, a comparison that is unconstrained by each different type of tyre, by the characteristics of the support plane, and by the boundary conditions of the measurements that are potentially always variable.

Therefore, from the comparison it is possible to very precisely determine possible defects of the tyre.

Operatively, during the relative rotation between tool and tyre, for every measurement surface deformed by the tool at constant force at a certain angle, the height to which the measurement surface itself is brought is measured. This height is then compared with the height of the tyre in the same spatial position as can be derived from the profile. A comparison is then carried out between the measured height and the height of the profile, point by point, for a plurality of angular positions: i.e. for a given angular position at angle alpha, a comparison is made between the height at which the measurement surface is located (measured in the method) and the height of the point of the profile that is located at the same angle alpha. The height deriving from the profile is thus used as reference or "zero line".

The height at which the measurement surface is located can for example be determined through a linear laser transducer. In this way, an absolute reference is used for the comparison of the values detected during the execution of the method making it possible to obtain an evaluation of whether or not there are defects in a single complete rotation of the tyre. The cycle time is in this way decreased, and at the same time the measurement is more accurate.

In detail, in figures 4 and 5, the curve a) represents the height of the three-dimensional profile as the angular position varies (in the X-axis the angular position is represented), the curve b) represents the height measured after the application of the substantially constant force F and the curve c) represents the difference D between the curve heights a) and b).

Advantageously, the control unit 180 can be programmed to carry out the comparison between the difference D and the discard threshold S.

Preferably, it can be foreseen to continuously detect the value(s) of the height at every position of the tyre. In particular, the value of the output data is detected for every angular position of the tyre, preferably constantly maintaining the contact between the pushing element 23 and the free lateral portion 10b.

Possibly, it can be foreseen to calculate the difference D between the value of the measured height and the value of the height from three-dimensional profile in the same angular position at a discrete plurality of different angular positions of the tyre at the measurement surface belonging to a plurality of measurement surfaces M. Such a plurality can also be continuous, i.e. the difference between the measured height and a corresponding height value of the three-dimensional profile is worked out continuously.

As illustrated for example in figure 4, a substantially constant force F is applied and the height of the free lateral portion is detected for three and more rotations of the tyre about the axis X. In the same free lateral portion the angular area 50 corresponds to a more rigid part that, under the action of the force F, is arranged at a certain height, whereas the area 51 corresponds to a less rigid part that, under the action of the same force F, is arranged at a lower height. In this case, an inhomogeneity of the free lateral portion itself is thus identified.

After having carried out the test on a lateral portion of the tyre it is possible to flip the tyre so as to invert the free lateral portion and the rested lateral portion and repeat the actions described earlier. It is thus possible to obtain analogous results to those of figures 4-5 for each of the lateral portions of the tyre 10a, 10b.

## Claims

1. Method for checking tyres, comprising:
i. providing a tyre (3) having a rotation axis (X) on a support plane (2), defining a rested lateral portion (10a) and an opposite free lateral portion (10b), the rested lateral portion (10a) resting on the support plane (2) and the free lateral portion (10b) being arranged at a given height from the support plane (2);
ii. detecting at least one three-dimensional profile of a ring-shaped surface (31) of said tyre (3) with centre in said rotation axis (X), wherein said ring-shaped surface (31) is a portion of an outer surface (32) of said free lateral portion of said tyre (10b), said three-dimensional profile including a height of a plurality of points of said ring-shaped surface (31) and storing said three-dimensional profile of the tyre in a memory so as to use it for detecting more than one defect in said tyre (3);
iii. shifting a tool (23, 25) towards said tyre (3) arranged on the support plane (2) so as to rest on a measurement surface (M), said measurement surface being a portion of said ring-shaped surface (31);
iv. pushing said measurement surface (M) by means of said tool (23, 25) so as to apply a tool pressing force (F) on said measurement surface towards the support plane (2);
v. setting said tyre (3) in relative rotation with respect to said tool (23, 25) so that said tool is in successive contact with a plurality of different measurement surfaces (M), angularly spaced portions of said ring-shaped surface (31), keeping the tool pressing force (F) exerted by said tool (23, 25) on said measurement surfaces substantially constant along at least one complete rotation about said rotation axis (X);
vi. measuring a height of said measurement surfaces (M) at a plurality of relative angular positions between said tyre (3) and said tool (23, 25) along said complete rotation during said pushing action; and
vii. access said stored three-dimensional profile, comparing said height of said measurement surfaces (M) at a plurality of relative angular positions between said tyre (3) and said tool (23, 25) with a height of a plurality of points of said three-dimensional profile of said ring-shaped surface (31) at the same angular positions, the height of said three-dimensional profile being used as a reference and representing the zero line, and calculating a plurality of differences between said height of said measurement surfaces (M) and said height of said three-dimensional profile of said ring-shaped surface (31) at every relative angular position between said tyre (3) and said tool (23, 25); and
viii. determining whether said tyre (3) has a defect based on said comparison by classifying said tyre (3) as including a defect if at least one of said differences is outside of a predetermined range of values.

2. Method according to claim 1, including:
- providing a database including a plurality of tyre models, each tyre model of the plurality being associated with a value of said tool pressing force (F), wherein the database is saved in the memory;
- determining the tyre model arranged on the support plane (2);
- recovering a value of said tool pressing force (F) saved in said database and associated with the tyre model determined;
- pushing through said tool said measurement surface (M) so as to apply said tool pressing force (F) as recovered from said database.

3. Method according to claim 1 or 2, including detecting a three-dimensional profile of an entire inner surface (33) and the outer surface (32) delimiting said tyre (3).

4. Method according to one or more of the previous claims, wherein providing a tyre having a rotation axis on a support plane (2) includes arranging said tyre on said support plane with axial mid-plane (4) substantially parallel to the support plane.

5. Method according to one or more of the previous claims, wherein pushing said measurement surface (M) through said tool (23, 25) includes pushing said measurement surface through said tool with a tool pressing force (F) comprised between about 10 N and about 150 N.

6. Method according to one or more of the previous claims, comprising:
- obtaining said three-dimensional profile to save it in the memory, and
- using said saved profile to detect more than one type of defect on said tyre.

7. Method for checking tyres according to one or more of the previous claims, comprising setting the tyre (3) in rotation about said rotation axis (X) with respect to said tool to change the measurement surface (M) in contact with said tool.

8. Method according to one or more of the previous claims, wherein comparing said height of said measurement surface (M) at a plurality of relative angular positions between said tyre and said tool with a height of a plurality of points of said three-dimensional profile of said ring-shaped surface (31) at the same angular positions includes comparing said height of said measurement surface (M) and a corresponding height of a point of said three-dimensional profile every 0.1 radians.

9. Apparatus (1) for checking tyres, comprising:
- a support plane (2) configured to receive a tyre (3), defining a rested lateral portion (10a) and a free lateral portion (10b), the rested lateral portion (10a) resting on the support plane (2) and the free lateral portion (10b) and being arranged at a given height from the support plane (2);
- a tool (23, 25) configured to apply a tool pressing force (F) oriented towards the support plane (2) to a measurement surface (M) of said free lateral portion (10b) of the tyre;
- a positioning actuator operatively associated with the tool (23, 25) and configured to move said tool with at least one motion component parallel to a rotation axis (X) of the tyre;
- a rotation device to relatively modify the angular position of the measurement surface (M) with respect to the tool (23, 25);
- a control unit (180) programmed to
o access a three-dimensional profile of a ring-shaped surface (31) with centre in said rotation axis (X) of said tyre (3), said three-dimensional profile including a height of a plurality of points of said ring-shaped surface (31), wherein said ring-shaped surface (31) is a portion of an outer surface (32) of said free lateral portion of said tyre (10b);
o send a command to said positioning actuator so as to shift said tool (23, 25) towards said tyre arranged on the support plane (2) so as to rest on a measurement surface (M), said measurement surface being a portion of said ring-shaped surface (31), and pushing said measurement surface (M) through said tool (23, 25) so as to apply said tool pressing force (F) on said measurement surface (M) towards the support plane (2);
o send a command to said rotation device to set said tyre (3) in relative rotation with respect to said tool (23, 25) so that said tool is in successive contact with a different measurement surface, a portion of said ring-shaped surface (31), keeping the tool pressing force (F) exerted by said tool on said measurement surface substantially constant along at least one complete rotation of the tyre (3) about said rotation axis;
o measure a height of said measurement surfaces (M) at a plurality of relative angular positions between said tyre (3) and said tool (23, 25) along said complete rotation;
o compare said height of said measurement surfaces (M) at a plurality of relative angular positions between said tyre (3) and said tool (23, 25) with said height of a plurality of points of said three-dimensional profile of said ring-shaped surface (31) at the same angular positions, the height of said three-dimensional profile being used as a reference and representing the zero line;
o calculate a plurality of differences between said height of said measurement surfaces (M) and said height of said three-dimensional profile of said ring-shaped surface (31) at every relative angular position between said tyre (3) and said tool (23, 25), and
o determine whether said tyre (3) has a defect based on said comparison by classifying said tyre (3) as including a defect if at least one of said differences is outside of a predetermined range of values.

10. Apparatus (1) for checking tyres according to claim 9, comprising a thrusting actuator operatively associated with the tool and configured to push the tool against the free lateral portion (10b), said thrusting actuator including an electric motor.

11. Apparatus (1) according to claim 9, wherein said measurement surface (M) is arranged at the area of the free lateral portion (19b) of the tyre arranged at a greater height with respect to the support plane (2) before the application of said force (F).

12. Apparatus according to one or more of claims 9 to 11, comprising a memory adapted for storing said three-dimensional profile and adapted for being accessible to access said three-dimensional profile.

## Patentansprüche

1. Verfahren zum Überprüfen von Reifen, umfassend:
i. Bereitstellen eines Reifens (3) mit einer Drehachse (X) auf einer Stützebene (2), die einen ruhenden lateralen Abschnitt (10a) und einen gegenüberliegenden freie lateralen Abschnitt (10b) definiert, wobei der ruhende laterale Abschnitt (10a) auf der Stützebene (2) ruht und der freie laterale Abschnitt (10b) auf einer gegebenen Höhe von der Stützebene (2) angeordnet ist;
ii. Erfassen wenigstens eines dreidimensionalen Profils einer ringförmigen Oberfläche (31) des Reifens (3), wobei sich die Mitte in der Drehachse (X) befindet, wobei die ringförmige Oberfläche (31) ein Abschnitt einer äußeren Oberfläche (32) des freien lateralen Abschnitts des Reifens (10b) ist, wobei das dreidimensionale Profil eine Höhe einer Mehrzahl von Punkten der ringförmigen Oberfläche (31) beinhaltet und das dreidimensionale Profil des Reifens in einem Speicher speichert, um es zum Erfassen von mehr als einem Defekt in dem Reifen (3) zu verwenden;
iii. Schieben eines Werkzeugs (23, 25) zu dem Reifen (3), der auf der Stützebene (3) angeordnet ist, um auf einer Messoberfläche (M) zu ruhen, wobei die Messoberfläche ein Abschnitt der ringförmigen Oberfläche (31) ist;
iv. Drücken der Messoberfläche (M) mittels des Werkzeugs (23, 25), um eine Werkzeugdruckkraft (F) auf der Messoberfläche zu der Stützebene (2) anzuwenden;
v. Einstellen des Reifens (3) in relativer Drehung in Bezug auf das Werkzeug (23, 25), sodass das Werkzeug in fortlaufendem Kontakt mit einer Mehrzahl von verschiedenen Messoberflächen (M), winkelbeabstandeten Abschnitten der ringförmigen Oberfläche (31), steht, wobei die Werkzeugdruckkraft (F), die durch das Werkzeug (23, 25) auf die Messoberflächen ausgeübt wird, entlang der wenigstens einen vollständigen Drehung um die Drehachse (X) im Wesentlichen konstant ist;
vi. Messen einer Höhe der Messoberflächen (M) an einer Mehrzahl von relativen Winkelpositionen zwischen dem Reifen (3) und dem Werkzeug (23, 25) entlang der vollständigen Drehung während des Drückvorgangs; und
vii. Zugreifen auf das gespeicherte dreidimensionale Profil, Vergleichen der Höhe der Messoberflächen (M) an einer Mehrzahl von relativen Winkelpositionen zwischen dem Reifen (3) und dem Werkzeug (23, 25) mit einer Höhe einer Mehrzahl von Punkten des dreidimensionalen Profils der ringförmigen Oberfläche (31) an denselben Winkelpositionen, wobei die Höhe des dreidimensionalen Profils als eine Referenz verwendet wird und die Nulllinie darstellt, und Berechnen einer Mehrzahl von Differenzen zwischen der Höhe der Messoberflächen (M) und der Höhe des dreidimensionalen Profils der ringförmigen Oberfläche (31) bei jeder relativen Winkelposition zwischen dem Reifen (3) und dem Werkzeug (23, 25); und
viii. Bestimmen, ob der Reifen (3) auf der Grundlage des Vergleichs einen Defekt aufweist, indem der Reifen (3) als einen Defekt beinhaltend klassifiziert wird, wenn wenigstens eine der Differenzen außerhalb eines vorbestimmten Wertebereichs liegt.

2. Verfahren nach Anspruch 1, beinhaltend:
- Bereitstellen einer Datenbank, die eine Mehrzahl von Reifenmodellen beinhaltet, wobei jedes Reifenmodell der Mehrzahl mit einem Wert der Werkzeugdruckkraft (F) assoziiert ist, wobei die Datenbank in dem Speicher gespeichert wird;
- Bestimmen des Reifenmodells, das auf der Stützebene (2) angeordnet ist;
- Wiedergewinnen eines Wertes der Werkzeugdruckkraft (F), der in der Datenbank gespeichert und mit dem bestimmten Reifenmodell assoziiert ist;
- Drücken der Messoberfläche (M) durch das Werkzeug, um die Werkzeugdruckkraft (F), wie sie von der Datenbank wiedergewonnen wurde, anzuwenden.

3. Verfahren nach Anspruch 1 oder 2, beinhaltend das Erfassen eines dreidimensionalen Profils einer gesamten inneren Oberfläche (33) und der den Reifen (3) begrenzenden äußeren Oberfläche (32).

4. Verfahren nach einem oder mehreren der vorhergehenden Ansprüche, wobei das Bereitstellen eines Reifens mit einer Drehachse auf einer Stützebene (2) das Anordnen des Reifens auf der Stützebene mit einer axialen Mittelebene (4) im Wesentlichen parallel zu der Stützebene beinhaltet.

5. Verfahren nach einem oder mehreren der vorhergehenden Ansprüche, wobei das Drücken der Messoberfläche (M) durch das Werkzeug (23, 25) das Drücken der Messoberfläche durch das Werkzeug mit einer Werkzeugdruckkraft (F) beinhaltet, die zwischen etwa 10 N und etwa 150 N enthalten ist.

6. Verfahren nach einem oder mehreren der vorhergehenden Ansprüche, umfassend:
- Erhalten des dreidimensionalen Profils, um es in dem Speicher zu speichern, und
- Verwenden des gespeicherten Profils, um mehr als eine Art von Defekt an dem Reifen zu erfassen.

7. Verfahren zum Prüfen von Reifen nach einem oder mehreren der vorhergehenden Ansprüche, umfassend das Einstellen des Reifens (3) in Drehung um die Drehachse (X) in Bezug auf das Werkzeug, um die Messoberfläche (M) in Kontakt mit dem Werkzeug zu ändern.

8. Verfahren nach einem oder mehreren der vorhergehenden Ansprüche, wobei das Vergleichen der Höhe der Messoberfläche (M) bei einer Mehrzahl von relativen Winkelpositionen zwischen dem Reifen und dem Werkzeug mit einer Höhe einer Mehrzahl von Punkten des dreidimensionalen Profils der ringförmigen Oberfläche (31) an denselben Winkelpositionen das Vergleichen der Höhe der Messoberfläche (M) und einer entsprechenden Höhe eines Punktes des dreidimensionalen Profils alle 0,1 Radiant beinhaltet.

9. Vorrichtung (1) zum Prüfen von Reifen, umfassend:
- eine Stützebene (2), die zum Aufnehmen eines Reifens (3) konfiguriert ist und einen ruhenden lateralen Abschnitt (10a) und einen freien lateralen Abschnitt (10b) definiert, wobei der ruhende laterale Abschnitt (10a) auf der Stützebene (2) ruht und der freie laterale Abschnitt (10b) in einer bestimmten Höhe von der Stützebene (2) angeordnet ist;
- ein Werkzeug (23, 25), das zum Anwenden einer zu der Stützebene (2) gerichtete Werkzeugdruckkraft (F) auf eine Messoberfläche (M) des freien lateralen Abschnitts (10b) des Reifens konfiguriert ist;
- einen Positionierungsaktuator, der betriebsmäßig mit dem Werkzeug (23, 25) assoziiert ist und zum Bewegen des Werkzeugs mit wenigstens einer Bewegungskomponente parallel zu einer Drehachse (X) des Reifens konfiguriert ist;
- eine Einrichtung zum relativen Modifizieren der Winkelposition der Messoberfläche (M) in Bezug auf das Werkzeug (23, 25);
- eine Steuereinheit (180), die programmiert ist, zum
o Zugreifen auf ein dreidimensionales Profil einer ringförmigen Oberfläche (31), wobei sich die Mitte in der Drehachse (X) des Reifens (3) befindet, wobei das dreidimensionale Profil eine Höhe einer Mehrzahl von Punkten der ringförmigen Oberfläche (31) beinhaltet, wobei die ringförmige Oberfläche (31) ein Abschnitt einer äußeren Oberfläche (32) des freien lateralen Abschnitts des Reifens (10b) ist;
o Senden eines Befehls an den Positionierungsaktuator, um das Werkzeug (23, 25) zu dem auf der Stützebene (2) angeordneten Reifens zu schieben, um auf einer Messoberfläche (M) zu ruhen, wobei die Messoberfläche ein Abschnitt der ringförmigen Oberfläche (31) ist, und Drücken der Messoberfläche (M) durch das Werkzeug (23, 25), um die Werkzeugdruckkraft (F) auf die Messoberfläche (M) zu der Stützebene (2) anzuwenden;
o Senden eines Befehls an die Dreheinrichtung zum Einstellen des Reifens (3) in relativer Drehung in Bezug auf das Werkzeug (23, 25), sodass das Werkzeug in fortlaufendem Kontakt mit einer anderen Messoberfläche, einem Abschnitt der ringförmigen Oberfläche (31), steht, wobei die von dem Werkzeug auf die Messoberfläche ausgeübte Werkzeugdruckkraft (F) entlang wenigstens einer vollständigen Drehung des Reifens (3) um die Drehachse im Wesentlichen konstant gehalten wird;
o Messen einer Höhe der Messoberflächen (M) an einer Mehrzahl von relativen Winkelpositionen zwischen dem Reifen (3) und dem Werkzeug (23, 25) entlang der vollständigen Drehung;
o Vergleichen der Höhe der Messoberflächen (M) an einer Mehrzahl von relativen Winkelpositionen zwischen dem Reifen (3) und dem Werkzeug (23, 25) mit der Höhe einer Mehrzahl von Punkten des dreidimensionalen Profils der ringförmigen Oberfläche (31) an denselben Winkelpositionen, wobei die Höhe des dreidimensionalen Profils als eine Referenz verwendet wird und die Nulllinie darstellt;
o Berechnen einer Mehrzahl von Differenzen zwischen der Höhe der Messoberflächen (M) und der Höhe des dreidimensionalen Profils der ringförmigen Oberfläche (31) bei jeder relativen Winkelposition zwischen dem Reifen (3) und dem Werkzeug (23, 25), und
o Bestimmen, ob der Reifen (3) einen Defekt aufweist, auf der Grundlage des Vergleichs, indem der Reifen (3) als einen Defekt beinhaltend klassifiziert wird, wenn wenigstens eine der Differenzen außerhalb eines vorbestimmten Wertebereiches liegt.

10. Vorrichtung (1) zum Prüfen von Reifen nach Anspruch 9, umfassend einen Schubaktuator, der betriebsmäßig mit dem Werkzeug assoziiert ist und zum Drücken des Werkzeugs gegen den freien lateralen Abschnitt (10b) konfiguriert ist, wobei der Schubaktuator einen elektrischen Motor beinhaltet.

11. Vorrichtung (1) nach Anspruch 9, wobei die Messoberfläche (M) in dem Bereich des freien lateralen Abschnitts (19b) des Reifens angeordnet ist, der in einer größeren Höhe in Bezug auf die Stützebene (2) vor der Anwendung der Kraft (F) angeordnet ist.

12. Vorrichtung nach einem der Ansprüche 9 bis 11, umfassend einen Speicher, der angepasst ist, um das dreidimensionale Profil zu speichern, und angepasst ist, um zum Zugreifen auf das dreidimensionale Profil zugreifbar zu sein.

## Revendications

1. Procédé de vérification de pneus, comprenant le fait de :
i. fournir un pneu (3) ayant un axe de rotation (X) sur un plan support (2), définissant une partie latérale au repos (10a) et une partie latérale libre opposée (10b), la partie latérale au repos (10a) reposant sur le plan de support (2) et la partie latérale libre (10b) étant agencée à une hauteur donnée par rapport au plan de support (2) ;
ii. détecter au moins un profil tridimensionnel d'une surface en forme d'anneau (31) dudit pneu (3) avec le centre dans ledit axe de rotation (X), où ladite surface en forme d'anneau (31) est une partie d'une surface extérieure (32) de ladite partie latérale libre dudit pneu (10b), ledit profil tridimensionnel comportant une hauteur d'une pluralité de points de ladite surface en forme d'anneau (31) et stocker ledit profil tridimensionnel du pneu dans une mémoire de manière à l'utiliser pour détecter plus d'un défaut dans ledit pneu (3) ;
iii. déplacer un outil (23, 25) vers ledit pneu (3) agencé sur le plan de support (2) de manière à reposer sur une surface de mesure (M), ladite surface de mesure étant une partie de ladite surface en forme d'anneau (31) ;
iv. pousser ladite surface de mesure (M) au moyen dudit outil (23, 25) de manière à appliquer une force de pression d'outil (F) sur ladite surface de mesure vers le plan de support (2) ;
v. mettre ledit pneu (3) en rotation relative par rapport audit outil (23, 25) de sorte que ledit outil soit en contact successif avec une pluralité de surfaces de mesure différentes (M), des parties angulairement espacées de ladite surface en forme d'anneau (31), en maintenant la force de pression d'outil (F) exercée par ledit outil (23, 25) sur lesdites surfaces de mesure sensiblement constante le long d'au moins une rotation complète autour dudit axe de rotation (X) ;
vi. mesurer une hauteur desdites surfaces de mesure (M) à une pluralité de positions angulaires relatives entre ledit pneu (3) et ledit outil (23, 25) le long de ladite rotation complète pendant ladite action de poussée ; et
vii. accéder audit profil tridimensionnel stocké, en comparant ladite hauteur desdites surfaces de mesure (M) à une pluralité de positions angulaires relatives entre ledit pneu (3) et ledit outil (23, 25) avec une hauteur d'une pluralité de points dudit profil tridimensionnel de ladite surface en forme d'anneau (31) aux mêmes positions angulaires, la hauteur dudit profil tridimensionnel étant utilisée comme référence et représentant la ligne zéro, et en calculant une pluralité de différences entre ladite hauteur desdites surfaces de mesure (M) et ladite hauteur dudit profil tridimensionnel de ladite surface en forme d'anneau (31) à chaque position angulaire relative entre ledit pneu (3) et ledit outil (23, 25) ; et
viii. déterminer si ledit pneu (3) a un défaut sur la base de ladite comparaison en classant ledit pneu (3) comme comportant un défaut si au moins l'une desdites différences est en dehors d'une plage de valeurs prédéterminée.

2. Procédé selon la revendication 1, comportant le fait de :
- fournir une base de données comportant une pluralité de modèles de pneu, chaque modèle de pneu de la pluralité étant associé à une valeur de ladite force de pression d'outil (F), où la base de données est enregistrée dans la mémoire ;
- déterminer le modèle de pneu agencé sur le plan support (2) ;
- récupérer une valeur de ladite force de pression d'outil (F) enregistrée dans ladite base de données et associée au modèle de pneu déterminé ;
- pousser à travers ledit outil ladite surface de mesure (M) de manière à appliquer ladite force de pression d'outil (F) telle que récupérée de ladite base de données.

3. Procédé selon la revendication 1 ou 2, comportant la détection d'un profil tridimensionnel d'une surface intérieure entière (33) et de la surface extérieure (32) délimitant ledit pneu (3).

4. Procédé selon une ou plusieurs des revendications précédentes, dans lequel la fourniture d'un pneu ayant un axe de rotation sur un plan de support (2) comporte l'agencement dudit pneu sur ledit plan de support avec un plan médian axial (4) sensiblement parallèle au plan de support.

5. Procédé selon une ou plusieurs des revendications précédentes, dans lequel la poussée de ladite surface de mesure (M) à travers ledit outil (23, 25) comporte la poussée de ladite surface de mesure à travers ledit outil avec une force de pression d'outil (F) comprise entre environ 10 N et environ 150 N.

6. Procédé selon une ou plusieurs des revendications précédentes, comprenant le fait de :
- obtenir ledit profil tridimensionnel pour l'enregistrer dans la mémoire, et
- utiliser ledit profil enregistré pour détecter plus d'un type de défaut sur ledit pneu.

7. Procédé de vérification de pneus selon une ou plusieurs des revendications précédentes, comprenant la mise en rotation du pneu (3) autour dudit axe de rotation (X) par rapport audit outil pour modifier la surface de mesure (M) en contact avec ledit outil.

8. Procédé selon une ou plusieurs des revendications précédentes, dans lequel la comparaison de ladite hauteur de ladite surface de mesure (M) à une pluralité de positions angulaires relatives entre ledit pneu et ledit outil avec une hauteur d'une pluralité de points dudit profil tridimensionnel de ladite surface en forme d'anneau (31) aux mêmes positions angulaires comporte la comparaison de ladite hauteur de ladite surface de mesure (M) et d'une hauteur correspondante d'un point dudit profil tridimensionnel chaque 0,1 radian.

9. Appareil (1) de vérification de pneus, comprenant :
- un plan de support (2) configuré pour recevoir un pneu (3), définissant une partie latérale au repos (10a) et une partie latérale libre (10b), la partie latérale au repos (10a) reposant sur le plan de support (2) et la partie latérale libre (10b) étant agencée à une hauteur donnée par rapport au plan de support (2) ;
- un outil (23, 25) configuré pour appliquer une force de pression d'outil (F) orientée vers le plan de support (2) à une surface de mesure (M) de ladite partie latérale libre (10b) du pneu ;
- un actionneur de positionnement associé fonctionnellement à l'outil (23, 25) et configuré pour déplacer ledit outil avec au moins une composante de mouvement parallèle à un axe de rotation (X) du pneu ;
- un dispositif de rotation pour modifier relativement la position angulaire de la surface de mesure (M) par rapport à l'outil (23, 25) ;
- une unité de commande (180) programmée pour
o accéder à un profil tridimensionnel d'une surface en forme d'anneau (31) avec le centre dans ledit axe de rotation (X) dudit pneu (3), ledit profil tridimensionnel comportant une hauteur d'une pluralité de points de ladite surface en forme d'anneau (31), où ladite surface en forme d'anneau (31) est une partie d'une surface extérieure (32) de ladite partie latérale libre dudit pneu (10b) ;
o envoyer une instruction audit actionneur de positionnement pour déplacer ledit outil (23, 25) vers ledit pneu agencé sur le plan de support (2) de manière à reposer sur une surface de mesure (M), ladite surface de mesure étant une partie de ladite surface en forme d'anneau (31), et pousser ladite surface de mesure (M) à travers ledit outil (23, 25) de manière à appliquer ladite force de pression d'outil (F) sur ladite surface de mesure (M) vers le plan de support (2) ;
o envoyer une instruction audit dispositif de rotation pour mettre ledit pneu (3) en rotation relative par rapport audit outil (23, 25) de sorte que ledit outil soit en contact successif avec une surface de mesure différente, une partie de ladite surface en forme d'anneau (31), en maintenant la force de pression d'outil (F) exercée par ledit outil sur ladite surface de mesure sensiblement constante le long d'au moins une rotation complète du pneu (3) autour dudit axe de rotation ;
o mesurer une hauteur desdites surfaces de mesure (M) à une pluralité de positions angulaires relatives entre ledit pneu (3) et ledit outil (23, 25) le long de ladite rotation complète ;
o comparer ladite hauteur desdites surfaces de mesure (M) à une pluralité de positions angulaires relatives entre ledit pneu (3) et ledit outil (23, 25) avec ladite hauteur d'une pluralité de points dudit profil tridimensionnel de ladite surface en forme d'anneau (31) aux mêmes positions angulaires, la hauteur dudit profil tridimensionnel étant utilisée comme référence et représentant la ligne zéro ;
o calculer une pluralité de différences entre ladite hauteur desdites surfaces de mesure (M) et ladite hauteur dudit profil tridimensionnel de ladite surface en forme d'anneau (31) à chaque position angulaire relative entre ledit pneu (3) et ledit outil (23, 25), et
o déterminer si ledit pneu (3) a un défaut sur la base de ladite comparaison en classant ledit pneu (3) comme comportant un défaut si au moins l'une desdites différences est en dehors d'une plage de valeurs prédéterminée.

10. Appareil (1) de vérification de pneus selon la revendication 9, comprenant un actionneur de poussée associé fonctionnellement à l'outil et configuré pour pousser l'outil contre la partie latérale libre (10b), ledit actionneur de poussée comportant un moteur électrique.

11. Appareil (1) selon la revendication 9, dans lequel ladite surface de mesure (M) est agencée au niveau de la zone de la partie latérale libre (19b) du pneu agencée à une plus grande hauteur par rapport au plan de support (2) avant l'application de ladite force (F).

12. Appareil selon une ou plusieurs des revendications 9 à 11, comprenant une mémoire adaptée pour stocker ledit profil tridimensionnel et adaptée pour être accessible pour accéder audit profil tridimensionnel.
